(19) Europäisches Patentamt
European Patent Office
Office européen des brevets

(11) Publication number: **0 248 377 B1**

(12) # EUROPEAN PATENT SPECIFICATION

(45) Date of publication of patent specification: **13.07.94**

(51) Int. Cl.5: **G10L 5/06**

(21) Application number: **87107885.3**

(22) Date of filing: **01.06.87**

(54) **Continuous speech recognition system.**

(30) Priority: **02.06.86 PCT/US86/01224**
**02.06.86 PCT/US86/01222**

(43) Date of publication of application:
**09.12.87 Bulletin 87/50**

(45) Publication of the grant of the patent:
**13.07.94 Bulletin 94/28**

(84) Designated Contracting States:
**AT BE CH DE ES FR GB GR IT LI LU NL SE**

(56) References cited:

**ICASSP '85, IEEE INTERNATIONAL CONFERENCE ON ACOUSTICS, SPEECH AND SIGNAL PROCESSING, Tampa, 26th-29th March 1985, vol. 3, pages 1197-1200, IEEE, New York, US; M.A. BUSH: "Network-based connected digit recognition using vector quantization"**

**ICASSP '85, IEEE INTERNATIONAL CONFERENCE ON ACOUSTICS, SPEECH AND SIGNAL PROCESSING, San Diego, 19th-21st March 1984, vol. 3, pages 35.5.1-35.5.4, New York, US; M. CRAVERO et al.: "Syntax driven recognition of connected words by markov models"**

(73) Proprietor: **MOTOROLA, INC.**
**1303 East Algonquin Road**
**Schaumburg, IL 60196(US)**

(72) Inventor: **Gerson, Ira A.**
**1120 Notingham Lane**
**Hoffman Estates Illinois 60196(US)**

(74) Representative: **Hudson, Peter David et al**
**Motorola**
**Patent and Licensing Operations - Europe**
**Jays Close**
**Viables Industrial Estate**
**Basingstoke Hampshire RG22 4PD (GB)**

EP 0 248 377 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Background of the Invention

The present invention relates to speech recognition, and, more particularly, to speech recognition wherein spoken word end points are not predetermined.

Recognition of isolated words from a given grammar for a known speaker has been known for some time. Words of the grammar are prestored as individual templates, each template representing the sound pattern for a word in the grammar. When an isolated word is spoken, the system compares the word to each individual template representing the grammar. This method is commonly referred to as whole-word template matching. Many successful recognition systems use whole-word template matching with dynamic programming to cope with nonlinear time scale variations between the spoken word and the prestored template.

Although this technique has been effective for isolated word recognition applications, many practical applications require continuous word recognition. In continuous word recognition, the number of words in a phrase can be unlimited and the identity of the earlier words can be determined before the end of the phrase, whereas in isolated word recognition, delimiters are used to identify the beginning and ending of input patterns and recognition occurs one word at a time. Moreover, a continuous speech recognition system must distinguish an input pattern from other recognizable patterns, background noise, speaker induced noise such as breathing noise, while isolated recognition cannot usually tolerate other recognizable patterns at the beginning or ending of the word.

In "Network-based connected digit recognition using vector quantization", M.A. Bush, IEEE International Conference on Acoustics, Speech and Signal Processing, Tampa, 26-29 March 1985 vol 3 pages 1197-1200, a method of connected digit recognition is described in which branches of a network represent classes of acoustic-phonetic segments.

In "Two level DP Matching - A dynamic programming based pattern matching algorithm for connected word recognition", H. Sakoe, IEEE Trans. Acoustics, Speech and Signal Processing, Vol. ASSP-27, No. 6, pp.588-595, Dec. 1979, the method of whole-word template matching has been extended to deal with connected word recognition. The paper suggests a two-pass dynamic programming algorithm to find a sequence of word templates which best matches the whole input pattern. In the first pass, a score is generated which indicates the similarity between every template matched against every possible portion of the input pattern. In the second pass, the score is used to find the best sequence of templates corresponding to the whole input pattern.

This extended method has distinct disadvantages. One disadvantage of this technique is the amount of computation time it requires. Depending on the specific design requirements, this limitation may create unwarranted need for an expensive high-speed processor.

Another disadvantage of this method is that the endpoints of the input pattern must be predetermined and the whole input pattern must be stored in the system before any accurate template matching can occur. For an input pattern of any significant length, recognition response time would be substantially degraded. Also, errors in endpoint detection will seriously degrade recognizer performance. Further, the memory required to store this information may become excessive.

In "Partial Traceback and Dynamic Programming", P. Brown, J. Spohrer, P. Hochschild, and J. Baker, IEEE Trans. Acoustics, Speech and Signal Processing, Vol.ASSP-27, No.6, pp.588-595, Dec. 1979, a technique is described which allows for continuous speech recognition of arbitrarily long input patters without predetermination of endpoints. This is accomplished using a technique called partial traceback. Partial traceback allows outputting of recognized words prior to completion of the complete input pattern without sacrificing recognizer performance. However, the partial traceback technique described appears to be processor burdensome and cumbersome to implement.

Accordingly, there is a need for a continuous speech recognition system which can easily be implemented, yet can operate efficiently and inexpensively in real time.

### Summary of the Invention

According to the present invention, a speech recognition system is provided for recognizing groups of input frames, wherein a grammar model may be stored in memory, the grammar model being composed of nodes connected by arcs, wherein the arcs have at least one associated template stored in memory and respective originating and terminating nodes, and wherein groups of input frames may be compared to the stored templates to generate similarity measure parameters, comprising:

means for structuring the grammar model such that a first selected arc set, composed of one or more arcs and their respective nodes, comprises a loop within the grammar model;

means for providing first parameter storage for one or more nodes, including a terminating node for a selected arc;

means for determining at least one first similarity measure parameter set for storage in said first parameter storage for the originating node of said selected arc;

the speech recognition system being characterized in that it comprises means for providing second parameter storage for at least one node, including a terminating node for a selected arc;

means for determining at least one second similarity measure parameter set for said selected arc using one or more templates associated with said selected arc and said first similarity measure parameter set stored at said originating node;

means for determining a third similarity measure parameter set for said selected arc using said at least one second similarity measure parameter set determined for said selected arc;

means for storing said third similarity measure parameter set determined at said terminating node in said first parameter storage means for said terminating node;

means for selectively transferring said first parameter storage contents to said second parameter storage means for said terminating node; and

means for recognizing groups of input frames using said parameter storage contents associated with said terminating node.

The invention also provides a method as defined in claim 4.

It is an advantage of the invention that it allows efficient memory management of speech recognition memory during the recognition process. The invention also has the advantage of allowing a recognition grammar model including loops within the grammar model.

more nodes including a terminating node for a selected arc, determining similarity measure parameters for the originating node of the selected arc, determining similarity measure parameters at the terminating node for that arc using a template associated with the arc and previously determined similarity measure parameters. Further, the similarity measure parameters determined at the terminating node are stored in the first parameter storage for the terminating node. The first parameter storage contents are transferred to the second parameter storage for the terminating node, and the groups of input frames are recognized using the parameter storage contents associated with the terminating node.

## Brief Description of the Drawings

The features of the present invention which are believed to be novel are set forth with particularity in the appended claims. The invention, together with further objects and advantages thereof, may best be understood by making reference to the following description taken in conjunction with the accompanying drawings, in the several figures of which like reference numerals identify identical elements, and wherein:

Figure 1 is a hardware block diagram of a speech recognition system depicted in accordance with the present invention;

Figure 2 is a graphic representation of a recognition grammar model illustrating one aspect of a speech recognition system implemented in accordance with the present invention;

Figure 3 is a graphic representation of a speech grammar tree illustrating an enumeration of all possible paths through the speech grammar model of Figure 1;

Figure 4 is a graphic representation of a grammar model in accordance with the present invention;

Figures 5a, 5b and 5c comprise a flowchart depicting a set of steps which may be performed to implement a recognition process in accordance with the present invention;

Figure 6 is a flowchart more particularly illustrating block 72 of Figure 5c;

Figures 7a, 7b, 7c and 7d comprise a flowchart more particularly illustrating block 44 of Figure 5a;

Figure 8 comprises a series of grammar tree diagrams illustrating an example of "traceback" in accordance with the present invention.

Figure 9 is a tree diagram showing the entries of the link table in one example

## Detailed Description of the Preferred Embodiment

Referring to Fig. 1, shown is a block diagram of a speech recognition system which can be used to implement the present invention. The diagram includes template memory 10 which contains a prestored grammar. Formation of a typical prestored grammar is described in "A simplified, robust training procedure for speaker trained, isolated word recognition systems", L.R.Rabiner and J.G.Wilpon, Journal Acoustic Society of Amer., 68(5), Nov. 1980. An acoustic processor 12, such as is described in "On the effects of varying filter bank parameters on isolated word recognition", B.A. Dautrich, L.R. Rabiner and T.B. Martin, IEEE Trans. on Acoustics, Speech and signal Processing, pp.793-806 Vol. ASSP-31, August 1983, may be used to convert input speech into a series of speech segments, commonly referred to as "frames". Each frame represents a time segment of input speech, usually in the form of LPC or filter bank data The frames from the acoustic processor are passed to recognizer 14.

The recognizer 14 accesses word templates from the grammar prestored in template memory 10 and processes each input frame from the acoustic processor 12 with segments of the word templates. Such a technique is inherent to many speech recognition system and may be referred to as "template processing".

The recognizer 14 bidirectionally accesses two tables, memory for link table 16 and memory for node table 19. Memory for link table 16 is used for storing five related arrays. Memory for node table 19 is used for storing parameters relating to a grammar model. These tables, along with the grammar model, are further discussed below.

The recognizer 14 may be implemented by using two processors, a recognition processor 18 and a link and traceback processor 20. The recognition processor 18 handles all template matching, grammar, control and communication with the link and traceback processor 20. The link and traceback processor 20 is used to maintain the memory for link tables 16. This function includes recording potential template matches while the continuous speech is being input, storing related information in the memory for link tables 16, freeing space in memory for link tables 16 for additional information and outputting recognizing results as input speech is identified. The functions of the recognition processor 18 and the link and traceback processor 20 may be combined into one processor or may be separated, as shown, whereby the recognition processor 18 may be implemented as specifically described in "An Algorithm for Connected Word Recognition", J. Bridle, M. Brown and R. Chamberlain, Proceedings of the IEEE International Conference on Acoustics, Speech and Signal Processing, pp.899-902, 1982. The link and traceback processor may be implemented with an 8 bit processor such as Motorola's MC6801, when used in accordance with the present invention.

## MODELING THE GRAMMAR

Referring now to Figure 2, a simplified recognition grammar model is shown to illustrate all possible word sequences which may be recognized by the system. The model is referred to as "simplified" because the grammar shown is grossly limited, for the purpose of illustration, from what would typically be required. In Figure 2, there are six possible word strings, each comprising two words (further discussed with Figure 3). In a typical speech recognition system, the grammar model may include many more possible word strings, each of which may contain several words (arcs). The topology of the grammar model is stored in general memory as a network of interconnected arcs with each arc having an originating node and a terminating node. Each arc may also have one or more pointers pointing to the corresponding templates in template memory.

## MODELING THE GRAMMAR PATHS

In Figure 3, each of the six possible word strings from Figure 2 is enumerated in a tree diagram. There are three possible first words, "one", "two" and "three". Each possible first word may be followed by two possible second words, "four" and "five". During template matching, i.e. while input frames are being compared against prestored word templates, the recognition processor recognizes potential "word ends". A potential "word end" is found when a sequence of input frames potentially matches a word template. The identified word template is appended to the tree diagram through link information stored in the link table, previously mentioned, and an accumulated distance indicating a measure of similarity between the sequence of input frames being processed and the template(s) leading up to the node. For example, given the grammar string possibilities of Figures 2 and 3, when an input frame sequence is identified as potentially matching the word "two", "two" is added to the tree diagram from the initial node, node 24. Figure 3 illustrates that after additional frames are input and processed, the word "one" has become a potential match; hence, it is next added to the tree diagram also at node 24. Next the word "three" is added to the tree diagram, then "four" appended to node 26, followed by "five" appended to the same node, etc. This continues with each potential matching template added to the tree diagram as it is identified in time.

The term "tree node", or reference to a node in the tree diagram, will be used interchangably with the term link(ed) record. In general, a linked record is a data set stored in memory defining a connection in the tree diagram, including identification of the particular tree node and relation to the previous node in the tree topology.

For each potential word end frame, a new entry, or link record, is added to the link table, corresponding to a link in the representative tree diagram. Quite often, a word template, typically represented as a sequence of frames (representing states) in the form of a state diagram, will have multiple potential word ends as input frames are being processed. Each time a potential word end is detected, the corresponding template is added to the tree as a new link. Further, each state of each template has recorded an accumulated distance processed through the present input frame, and a link pointer pointing to the link record in the link table corresponding to the link in the tree from which decoding for that template began. For further information on template matching, reference may be made to "An Algorithm for Connected Word Recognition", J. Bridle, M. Brown and R. Chamberlain, Proceedings of the IEEE International Conference on Acoustics, Speech and Signal Processing, pp.899-902, 1982.

Unfortunately, when the grammar is large, continuously appending templates to the tree causes problems. First, it delays recognition response time. The longer the input frame sequence, the longer the operator must wait before the system recognizes and takes action upon the recognized words.

Second, continuously appending templates requires extensive memory for linking the tree diagram information. For complex grammar models and several potential word end frames for each potential word match, the memory requirements for the link table (tree) will grow at a very fast rate. If the growth rate is too large, memory requirements may become impractical.

A third problem pertains to actually modeling the grammar. In continuous speech applications it is desirable, and sometimes necessary, to allow for recognition of indefinitely long connected word sequences. A model structure having such sequences will be referred to as an "infinite length model". As mentioned above, the grammar model in Figure 2 is somewhat simplified. It should be clear to one skilled in the speech recognition art that attempting to represent an infinite length sequence as a model in memory is not practical. Moreover, computation for the segments of the model would be impractical in a real time processing application. For these reasons the present invention is adapted to accommodate infinite length modeling with minimal computation and memory requirements.

## INFINITE LENGTH MODELING

Referring now to Figure 4, depicted is a graphic representation of a particular grammar model which can accommodate infinite length sequences using minimal memory and computation time. It should be understood by one skilled in the art that any given grammar requires specific modeling criteria. Hence, it should be clear that the example shown in Figure 4 can be modified to accommodate practically any required grammar.

The grammar allows recognition of any digits, 0-9, any of which may or may not be separated by a period of silence. In this model, input to the recognition process is terminated by the word "stop". For example, the sequence "0-1-1-9-8-0-4-stop" could be recognized with any of the dashes optionally representing silence.

Two aspects of this type of grammar model include employing a null arc between nodes and employing loops within the grammar model. A null arc is essentially a virtual connection between two nodes. It allows sequences or words to be recognized without replication of the arcs representing those words in the grammar model. For example, at node 27, if the word "stop" were to be recognized without employing the null arc, silence must be detected first. If silence was not required to precede the word "stop", then the grammar model would have to be modified such that an arc representing "stop" would also have to eminate from node 27. Hence, a null arc avoids having particular arcs which terminate at the null arc's originating node, from being duplicated from their originating nodes to the terminating node of the null arc.

A second advantage this type of grammar model realizes is the loop itself. By allowing looping, replications of template representations in the grammar model can be avoided. For example, if the word sequence "0-0-0-1-3-9" were to recognized, progression through the word model could be recognized without replicating "0" three times in the model.

To accommodate this type of word model, the present invention incorporates specific parameters. These parameters include, for each node, the current accumulated distance, the current link from which that accumulated distance originated, the previous accumulated distance and the previous link from which the previous accumulated distance originated. These parameters are stored in a node table, which may be structured as follows.

NODE TABLE

| Grammar Model Node # | Previous Accumulated Distance | Previous Link | Current Accumulated Distance | Current Link |
|---|---|---|---|---|
| 1 | | | | |
| 2 | | | | |
| 3 | | | | |
| . | | | | |
| . | | | | |
| . | | | | |

The node table is used to temporarily store information for each node while processing an input frame arcs leading into the node. An arc leading into the node may be a null arc or an arc having an associated template.

For each node, two sets of entries in the table are allocated. The first set of entries is the previous accumulated distance and its associated link. This information is temporarily stored to allow it to be used for determining the accumulated distance for the "best" arc into the node.

The second set of entries is the current accumulated distance and its associated link. Once all the arcs leading into the node have been processed for a given input frame, the previous "parameters" are copied to the "current" parameters, i.e. the information from the left two columns is copied to the right two columns, thereby retaining the best accumulated distance leading into the node, and the link for the arc from which it originated. Also, all the accumulated distances in the previous column are set inactive. The node table will be discussed further with the recognition flowchart in Figures 5a and 5b.

THE LINK TABLE

The link table represents all potential word sequences under consideration as matches in the form of a tree network, similar to Figure 2. The word sequences are, in effect, concatenated templates having potential word ends detected during template matching. Establishing the network in this fashion allows analysis of those links that are unambiguously part of all potential word sequences. This process of analysis is referred to as traceback. Properly employed, traceback also allows an efficient method of releasing link records which are unambiguously no longer part of any sequence still under consideration.

Each link, or nodal tree connection, of the tree diagram requires several types of information to be stored. This information is stored in L-ACT, L-FWRD, L-BACK, L-WORD and L-PTR arrays in memory for link table 16 of Figure 1. In this embodiment, each array is 255 bytes long and is positioned one byte past a 256 byte boundary to allow efficient access. The corresponding elements from each array constitute a "link record". The link records are chained into 2 linked lists. One list contains free link records, i.e. empty record space available for additional links. The second list is the established list and it contains records for links currently being used. These lists are chained together by L-PTR array, where one entry in L-PTR indicates the next link record in the table, from the established list or free list, where each record contains one byte from each of the five arrays. For example, if for a given link record in the established list, the corresponding byte of the L-PTR array contains the binary representation of the number "2", the next record in the established list would be found in the second byte of all five arrays. A "zero" entry in the L-PTR array defines the end of the linked list.

L-BACK and L-WORD arrays contain the actual link information. L-BACK contains the pointer to the previous link in the deccding path, i.e. the previous node in the tree diagram, while L-WORD contains a symbol representing the word decoded ending at the present link. For example, in Figure 3, after appending the word "four" to tree node 26, L-WORD would contain an 8-bit symbol representing the word "four" and L-BACK would contain a pointer pointing to the link record ccrresponding to tree node 26. The other two arrays, L-ACT and L-FWRD, are used to "traceback" through the decoding paths (potential word sequences). L-ACT is used to indicate decoding paths still under consideration as a potential match, while L-FWRD is used to point to the subsequent node in the tree diagram, the inverse of L-BACK. Hereinafter, those link records flagged as being under consideration as being part of a potentially recognized path (active path) will be referred to as active link records.

The link records provide traceback information so that the arc through the word model used to reach that state can be determined. Traceback also allows the tree to be pruned of nonuseful information. This is necessary to prevent information from excessively accumulating in memory. Traceback is also used to output words which are unambiguously recognized, i.e., common to all active paths. The L-BACK entries in the link table point to previous entries in the table, which correspond to previous connected nodes in the tree diagram. Hence, traceback refers to the process of tracing back through the tree diagram to a point, or tree node, where all paths merge. The concept of tracing back to a point where all paths merge is well known to those skilled in the art, for a general description "traceback" reference may be made to "Partial Traceback and Dynamic Programming", supra.

The above arrays are listed below for reference during discussion of the subsequent figures.

L-PTR: 255 bytes, each byte available for a pointer indicating the previous link record appended to the tree diagram (table) as a function of time for the established list. It is also used to chain free link records in the free list.

L-BACK: 255 bytes, each byte available for a pointer indicating the previous link record in the tree diagram.

L-WORD: 255 bytes, each byte available for a symbol indicating the potentially recognized word corresponding to the present link record.

L-ACT: 255 bytes, each byte available for indicating whether or not the present link record is active (used during traceback).

L-FWRD: 255 bytes, each byte available for a pointer indicating the subsequent valid link record in the tree diagram (used during traceback).

In addition to the above arrays, five other pointers are used. They are:

HEAD: a one byte pointer for indicating the first, i.e. the most recently added, link record in the established list, as chained by the L-PTR array.

FREE: a one byte pointer for indicating the first link record of the free list, as chained by the L-PTR array.

PTR: a one byte pointer for referencing the current tree node being processed.

TMP1 and TMP2: each is a one byte temporary pointer used in the recognition flowchart.

Structurally, presuming a table with only 10 entries in the established list, these arrays may be arranged as follows.

| Rec'd# | L-PTR | L-BACK | L-WORD | L-ACT | L-FWRD |
|---|---|---|---|---|---|
| 1 | 2 | 2 | four | 0 | 0 |
| 2 | 3 | 3 | four | 0 | 0 |
| 3 | 0 | - | - | 0 | 0 |
| 4 | 1 | 2 | one | 0 | 0 |
| 5 | 6 | 4 | three | 0 | 0 |
| 6 | 10 | 10 | six | 0 | 0 |
| 7 | 8 | 5 | three | 0 | 0 |
| 8 | 5 | 5 | nine | 0 | 0 |
| 9 | 4 | 1 | zero | 0 | 0 |
| 10 | 9 | 4 | one | 0 | 0 |

The entries of the above table are illustrated in a tree diagram in Figure 9. It should be noted that HEAD points to record # 7, and the "0" in the L-PTR entry for record # 3 indicates the last record on the list. FREE is not illustrated.

L-PTR allows the records in the established list to be entered by simply removing the record from the free list and designating its L-PTR entry to point to the HEAD record, and updating HEAD and FREE. When a record is deleted from the table's established list during traceback, that record becomes available without rearranging the table by linking the record entry to the free list, and linking over the removed record for the established list using the L-PTR entries. The entries for L-ACT and L-FWRD are only used during traceback and are otherwise always reset to zero.

THE RECOGNITION FLOWCHART

Referring now to Figures 5a through 5c, a recognition flowchart is shown in accordance with the present invention. The flowchart of Figure 5a begins at block 30 by resetting the link table and its associated pointers. The reset procedure includes setting each byte of L-FRWD and L-ACT equal to 0, setting HEAD pointer equal to 1 to indicate the beginning of the established list, and setting L-PTR(1) and L-PTR(255) equal to 0 to indicate the end of the established and free lists, respectively. Also, template state memory, typically stored in general memory, is set inactive. Accordingly, the first record comprises the established list, and records 2 through 255 are chained using L-PTR entries to form the free list, where HEAD points to the beginning of the established list and FREE points to the beginning of the free list (link record #2).

In block 32 of Figure 5a, the recognition grammar model is initialized by initializing the node table. This may be done by arbitrarily assigning the previous accumulated distance of the initial node a low accumulated distance measure to indicate the starting point in the grammar. The previous link pointer for the initial node is set to 1, corresponding to the first entry in the link table. All other nodes in the grammar model are initialized as inactive. A grammar node may be set inactive by setting the previous accumulated distances in the node table equal to infinity, thereby indicating that there is no likelihood of being at any other node at the start of processing.

In block 34 a traceback counter is initialized to 10. The traceback counter is used to periodically indicate that the traceback process should be performed. In this embodiment, traceback is performed after every 10 input frames are processed.

In block 36 the next input frame is input to the system for template matching, previously mentioned. The remaining steps of this flowchart all pertain to the processing of the present input frame.

The traceback counter is decremented in block 38 to indicate a frame has just been input.

At block 39, the node table is updated before processing the input frame. The previous node parameters ("parameters" refers to accumulated distance and links indicating from where they originate) are copied to the current node parameters in the node table. Also, all the previous accumulated distances are set inactive.

At block 40 a test is performed to determine whether or not all nodes of the grammar model have been processed. In other words, whether or not the input frame has been processed for the entire grammar model. If all nodes of the grammar model have been processed, flow proceeds to block 42 to determine if the traceback counter is indicating that traceback should be performed this frame. If so, traceback is performed by calling the traceback subroutine 44, subsequently discussed in Figures 7a through 7d. Following traceback, the traceback counter is reset, block 46, before processing the next input frame at block 36.

If all nodes of the grammar model have not been processed, flow proceeds from block 40 of Figure 5a to block 50 of Figure 5b. At block 50, processing of the recognition grammar model proceeds to the next node. If no nodes have been processed for this frame, "the next node" may be any node which is not a terminating node for a null arc. In particular, the ordering of nodes for processing must be such that a node which originates a null arc is processed prior to the node that is the terminating node for the null arc. This is to insure that node accumulated distances and links have been updated for originating nodes of templates before those templates are processed.

A test is performed in block 52 to determine whether or not all templates ending at this node have been processed. Later it will be recognized that each template immediately preceding each node of the grammar model is processed before moving to another node. If all the templates ending at this node have been processed, flow proceeds to block 68 of Figure 5c, subsequently discussed. If all the templates have not yet been processed, flow proceeds to block 54 to determine if the next arc to process at this node is a null arc. If the next arc is a null arc, flow proceeds to block 55.

At block 55, the accumulated distance and link leading into the node are set to the previous accumulated distance and link for the originating node of the null arc, as stored in the node table.

At this time, it may be helpful to summarize the processing of the recognition grammar model thus far indicated by the recognition flowchart. Referring once again to Figure 2, initial node 22 of the grammar model is set active and corresponding link table entry is initialized to indicate a reference from which all potential grammar paths (tree branches) eminate. For each input frame processed, the grammar model is progressed through one node at a time from the beginning node to the ending node. Further, for each node of the grammar model, each template ending at that node is processed one template at a time, as will be discussed. Accordingly, for each input frame, each node is processed and, for each node, each template ending at the node is processed.

Regardless of whether or not traceback is required, as indicated in block 56, the next template for the present arc is processed in either block 58 or block 60. Template matching at either block entails updating the accumulated distances and link pointers for all the states of the template based on the present input frame, the template, and the current accumulated distance and link pointer for the arcs originating node in the node table. Due to a one frame processing time delay from the time the current accumulated distance and link were computed (prior frame) and the time they are being utilized (present frame), this information must be used by the template processing as if it were processed for the prior frame. In other words, template processing will finish up the prior frame's processing using the current accumulated distance and current link before doing template processing for the present frame. If there is a potential word end for this template for the present frame, then an accumulated distance and link pointer will be generated corresponding to the potential word end. An Algorithm for Connected Word Recognition", supra.

If flow proceeds from block 56 to block 60, indicating that traceback is being processed this frame, in addition to the template processing described above, all L-ACT entries which correspond to the link records pointed to by the link pointers for each active state in the template are set nonzero. The "active" template states are those which have a finite accumulated distance.

Flow next proceeds to block 62, where a test is performed to determine whether or not the accumulated distance associated with the current template, or arc if a null arc, is better than the current accumulated distance corresponding to the best previously processed template (arc) ending at the node for this frame (this will be infinity if this is the first template processed for this node). The outcome of this test is true only when template matching of the present input frame suggests a potential word end of the word template. As previously mentioned, a potential word end indicates that a sequence of input frames may correspond to, or match, a word template prestored in template memory.

If the template does not have a potential word end for the present input frame, then its associated accumulated distance will be infinite.

Flow proceeds back to block 52 if the most recent template (arc) processed is not found to have an accumulated distance which is better than the current accumulated distance stored for that node, where additional templates ending at the node are processed.

If the accumulated distance for the most recent arc processed is found to be the best of those yet processed for the node, flow proceeds to block 64 to record this information. In block 64, the accumulated distance and the link pointer corresponding to the above processed arc are recorded as the current accumulated distance and current link for the node of the grammar model in the node table. Additionally, the word number, or symbol, representing the template is recorded. The word number is recorded for subsequently outputting the word if it is later determined to have been recognized. From block 64, flow proceeds to block 52 as discussed above.

Once it is indicated at block 54 that all the arcs ending at the node have been processed, flow proceeds to block 68 of Figure 5c. In Figure 5c, blocks 68 through 74 determine whether or not a link record should be added to the tree, and, if so, the link record is added to the tree through the link arrays.

In block 68, a test is performed to determine if the node of the grammar model is active. The only manner in which the node could have become active is if at least one word template processed for that node has a potential word end for the present input frame. If the node is inactive, flow proceeds to block 40 of Figure 5a to seek another node to process for the present frame. Otherwise, flow proceeds to block 70.

In block 70, a test is performed to determine whether or not the best arc ending at the node had a corresponding word template. In certain instances, it may have been another type of template such as a silence template, or it may have been a null arc, in which case flow would proceed to block 40 of Figure 5a. Silence templates are not added to the tree since it is typically not necessary to output silence as having been recognized. If the best arc ending at this node represents a word template, LINK subroutine, Figure 6, is called to add a link record to the tree diagram. Parameters are passed to LINK subroutine indicating the link pointer corresponding to the link record for the template and the word number representing the template.

After the link record is added, discussed below, a new link pointer is returned from LINK. In block 74, the current link pointer for the node of the grammar model is set to the link pointer passed from LINK.

Following block 74, flow proceeds to block 40 of Figure 5a to check if all the nodes of the grammar tree have been processed for the present input frame.

## ADDING A LINK TO THE TREE

Referring now to Figure 6, as previously mentioned this subroutine adds a link record to the tree diagram as defined by the link arrays. The parameters which are passed to the subroutine are the word number and the link pointer corresponding to the node of the tree from which it is being added.

In block 78, a test is preformed to determine whether or not there are any free link records. This is done by comparing FREE to 0. If FREE equals 0, there are no more free link records. Discussed above, the records in the link arrays are chained together by L-PTR array, which comprises free link records and established link records. Free link records allow additional link records to be added to the tree diagram. Accordingly, if there are no free link records, all the link records are being used and flow proceeds to block 80 where an error is reported and the system is reset. It should be noted that this step in block 80 is only used as a protection from unusual conditions which might lead to a link table overflow. Under normal conditions, the invention will prevent the absence of free link records by using a link table of adequate length.

Given one or more free link records, flow proceeds to block 82 where the next available link record is removed from the free list and inserted at the top, or beginning of the established list by updating the HEAD and FREE pointers. FREE is set to point to the index of the next free record and HEAD is set to point to the link record just added. L-PTR of the new "HEAD" link record is set to point to the previous "HEAD" link record to chain the new record onto the established list.

In block 86, since HEAD points to the link record just added in the established list, the word number passed to this subroutine is recorded for the new reccrd in the L-WORD array. Also, the link pointer passed to the subroutine is recorded for the link record in the L-BACK array.

At block 88, a test is performed to determine whether or not traceback is required for the present input frame. If so, flow proceeds to block 90 where the newly added link record is marked active. This is done by setting the L-ACT array for the record equal to one. If traceback is not required for the present input frame, the subroutine ends and flow returns to block 74 of Figure 5c.

TRACING BACK THROUGH THE TREE

Referring now to Figs. 7a through 7d, the traceback subroutine, i.e., block 44 of Fig. 5a, is shown in detail. The traceback subroutine searches through the tree diagram for words which have been identified as potential matches, and determines whether or not there is any ambiguity to the uniqueness of the match. Those words which have been uniquely identified are output from the recognition system as recognized words. Further, the traceback subroutine removes all dead link records, i.e. those records that are no longer under consideration as a potential match, to the free list to make memory available for future link records. Before entering TRACEBACK, L-ACT is set, or flagged, for all active link records as described above. At the start of traceback, active link records represent the ends of all paths through the tree which are still under consideration. The basic concept of traceback is to "traceback" through the tree from the ends of all active paths (marked initially by L-ACT array) to find where all active paths merge. The part of the tree which is common to all active paths represents the unambiguous partial path and those words corresponding to this unambiguous partial path may be output as being recognized. During traceback the L-FWRD array is used to chain partial paths in the forward direction (toward the ends of the tree). As these partial paths are built the base node for each partial path is set active via the L-ACT array. When an attempt is made to extend a partial path (using L-BACK information) from a current node to a previous node which is already marked active, then more than one possible path eminates from this previous node and the partial paths from both nodes are deleted (forward pointer chains (L-FWRD) reset to 0). All nodes marked active are processed this way. The order of node processing is in the reverse order of time sequence the link records were added into the link tables. This ordering is inherent in the structure of the established list. The last node to be processed will be the root node of the tree. At this point the forward chain (partial path) emanating from the node will represent the unambiguous partial path and the corresponding recognized words may be output. The traceback procedure also "cleans up" after itself in that upon completion the L-FWRD and L-ACT arrays will have been reset to zero. Further, all link records not on any active path, as well as the link records on the unambiguous partial path which has been outputted, will be returned to the free list.

Before describing the traceback subroutine in detail, it may be helpful to step through an illustrated example. Referring to Figure 8, such an example is depicted as a series of tree diagrams, A through I.

In diagram A, the tree is shown prior to traceback, active link records, i.e. those links that have active word links emanating from them are marked to the right of the link with a bold dot. The first step of traceback is to determine the most recent active link record as added in time, in this case the node marked 25. A test is performed to determine if there is an active node immediately preceding this node in the tree. If so, there is ambiguity as to which path, as in this instance via node 25 or node 21, traces back to node 21. When ambiguity occurs, the forward pointer for the nodes of ambiguity have their chained forward pointers removed if they exist. This is done by inserting a zero in the L-FWRD array for each subsequent link record. In this instance, neither node has a forward pointer, i.e. L-FWRD = 0.

The next most recently added active link record is then identified, node 24. Node 24's preceding link is also node 21 and is processed similar to the processing for node 25, discussed above.

The next most recently added active node is node 23. Since it does not have a preceding node which is active, the traceback process sets the preceding node active and records a forward pointer (L-FWRD) for the preceding node, node 19, equal to the node presently being processed, node 23. Diagram B illustrates tree diagram A after processing node 23, with the forward pointer added to node 19 depicted as a bold line. It should be noted that after each node is processed, its L-ACT entry which indicates that it is an active node, is removed. Hence, tree diagram B no longer depicts nodes 23, 24 and 25 as active.

Node 22 is the next most recently added entry with an active node. It does not have an active preceding node. Therefore, as was done for node 23, the forward pointer for node 18 is set equal to node 22, and node 18 is marked active. Diagram C illustrates the tree after processing node 22.

Node 21 is handled similar to node 22, since its preceding node is not active, shown in diagram D.

Node 20 is the next active node to be processed. The node preceding node 20 is active, which indicates ambiguity. When ambiguity occurs, the forward pointer for the nodes of ambiguity, in this case nodes 18 and 20, have their forward pointer chains removed. In this case only node 18 has a forward pointer. As indicated in the bold line after node 18, the forward pointer for node 18 has been set equal to node 22. Hence, in diagram E, the bold line is removed, by setting the forward pointer for node 18 equal to 0.

Node 19 is the next most recently added entry with an active node. Since its preceding node is active, ambiguity requires that the forward pointer chains for both nodes 16 and 19 be removed, as illustrated in Diagram F.

Node 18 is processed next. Since its preceding node, 16, is active but neither nodes 16 or 18 has a forward pointer, no action is taken except removing the bold dot indicating the activity of the node.

The next active node is node 16, which has a preceding node which is not active. In this case, the traceback process sets the preceding node active and records a forward pointer for the preceding node, node 13, equal to the node presently being processed, node 16. Diagram G illustrates tree diagram A after processing node 16.

Node 13 is handled similar to node 16. Hence, in diagram H the tree is shown with only node 11 marked active and only forward pointers for nodes 11 and 13 remain.

Once the traceback process arrives at the root node in the tree (node 11), that node which is not preceded by any other nodes, it outputs words chained through the forward pointers as recognized words. This is done by sequentially looking to those link records having chained forward pointers starting at the root node, in L-FWRD. As illustrated in Diagram I, the link records which record "eight" and "five" in their respective L-WORD arrays are output. Additionally, those link records representing the links between nodes 11 and 16, in diagram H, are removed from the established list and linked into the free list, as indicated by L-PTR array and FREE pointer, at which time the new root node of the tree is node 16. The remaining tree is illustrated in Diagram I, which is used as the additional input frames are processed, i.e. where flow returns to block 46 or Figure 5a in the recognition flowchart.

Referring now to Figures 7a-7d, the traceback flowchart will be discussed in detail. In Fig. 7a, the link table is searched for the most recently added link record which is active. In block 94, a test is performed to determine if the first record in the link table is the only record in the established record list. This is done by looking into the index of array L-PTR which is pointed to by HEAD. As previously mentioned, HEAD contains the index for the most recently added link record. If the L-PTR entry corresponding to HEAD is equal to zero, the chain is terminated and no additional records are in the table, in which case, flow proceeds to block 96 where the corresponding L-ACT entry is set inactive. From block 96, the subroutine returns to the recognition flowchart at block 46 at Fig. 5a.

In the case where there are additional link records in the table, a test is performed in block 98 to determine if the first link record is active. The link record is active if its corresponding L-ACT entry is not equal to zero.

If the link record is active, flow proceeds to block 100. In block 100, to indicate that the link record has been accounted for, the link record is set inactive. Flow then proceeds to block 110 where the record pointed to by HEAD is stored in the temporary pointer, PTR. From block 110, flow proceeds to block 120, subsequently discussed.

If the first link record turns out to be inactive, flow proceeds from block 98 to block 112. In block 112, L-PTR is stepped through until the first active link record is found, at which time the index for that active record is stored in PTR. In block 114, the active indicator is cleared to indicate processing for that link record, similarly done in block 100.

In block 116, those link records found inactive, as indicated between pointers HEAD and PTR, are returned to the free list for future use.

In block 118 a test is performed to determine if there are any more links in the link table. This test is similar to the test performed in block 94, above.

If there are no more link records in the established list, the subroutine returns to the recognition flowchart at block 46 of Figure 5a.

In block 120 a test is performed to determine whether or not the link (node), preceding the current link is inactive. This is done by looking to the back pointer for the current link record and looking to its corresponding L-ACT entry. If the preceding node is active, flow proceeds to block 124 of Fig. 7b to handle the problem of ambiguity, previously discussed. If the preceding node is inactive, flow proceeds to block 142 of Fig. 7c.

Referring now to Fig. 7b, the steps therein handle the ambiguity, when the preceding node indicates that there may be two or more link records emanating from that node that are still under consideration fcr a match. This occurs when a node preceding an active node is also active. The three temporary pointers (TMP1, TMP2 and PTR) are used in Fig. 7b for manipulation of link record data. The steps in block 121 remove the forward pointer chain from the previous link. These steps include blocks 124, 126, 128 and 130. Figure 7b is entered with PTR pointing to the node, or link record, currently being processed. The L-BACK entry corresponding to the link record points to the node immediately preceding the node currently being processed, as mentioned above. The L-FWRD entry associated with the link record indicates the only potential descendant link record.

In block 124, a pointer to the node immediately preceding the current active node is stored in TMP1. In block 126, the descendant link record, as indicated in L-FWRD, of the preceding node is stored TMP2.

In block 128, a test is performed to determine if the node pointed to by TMP2 has an actual L-FWRD entry or if it is set to zero. If the node pointed to by TMP2 dces have a forward pointer (L-FWRD not equal to 0), flow proceeds to block 130 where the forward pointer for that node is removed. In block 130, the contents of TMP2 is also moved to TMP1, which temporarily moves reference of the current node to the node pointed to by TMP2, then, starting with block 126, the above steps are repeated for the subsequent nodes until a node is found in the forward chain which does not have a forward pointer, as indicated in block 128, indicating the end of the forward chain.

The steps in block 122 remove the forward pointer chain from the current link, as indicated by PTR. In block 132 the current link record pointer, PTR, is stored in TMP1. In block 134, the L-FWRD entry for that link record is stored in TMP2. In block 136, a test is performed to determine if a forward pointer exists for this link record, as was done in block 128 above. If there is a forward pointer for this link record, flow proceeds to block 138 where the forward pointer is removed and the descendant node is stored in TMP1 for removing its forward pointer as well. Starting at block 134, the above steps are repeated until all forward pointers chained from the current node are deleted. Then, from block 136, flow proceeds to block 144 of Fig. 6c to process the next active link record.

Referring back to block 120 of Fig. 7a, if the node preceding the current node is inactive, flow proceeds to block 142 of Fig. 7c, which is now discussed.

In block 142 of Fig. 7c, since the preceding node (link record) was found inactive, it is set active and its forward pointer is set to point to the current link record. In block 144, starting at the current link record, the table is searched until the next active link record is found and PTR is set to point to this record, indicating the new current link record. In block 146, all inactive records encountered during the step of block 144 are returned to the free list by modifying the appropriate entries in the L-PTR array. In block 148 the new node is set inactive to indicate that it has been accounted for, similarly done in blocks 100 and 114 of Fig. 7a.

A test is performed in block 152 to determine whether or not this new link record is the last in the chain. If so, then all link records have been processed and flow prcceeds to block 156 of Fig. 7d to output the words recognized during the traceback process. If this new link record is not the last in the chain, then flow proceeds to block 120 of Fig. 7a for additional processing.

Referring now to Fig. 7d, in block 156 the index for the current link record, which is the root node in the tree, is stored in TMP1. At block 158, the node (link record) represented by the current node's forward pointer is stored in TMP2. For example, referring to diagram H of Fig. 8, TMP1 would contain 11 (node 11), and TMP2 would contain 13 (node 13).

In block 160, a test is performed to determine if there are any forward pointers descending from the node stored in TMP1. This is performed by comparing the contents of TMP2 to zero. If there are, flow proceeds to block 162 where the forward pointer for the current node is removed, and the current node is moved up to the next node in the forward chain, as indicated by the current node's forward pointer stored in TMP2. In block 164, the word associated with the current link record is output as a recognized word.

Starting with block 158, the above steps are repeated until each link record in the forward pointer chain has its associated word output as a recognized word. During the step in block 160, a descending link record will be found which does not have a forward pointer, in which case, flow proceeds to block 168 where all dead link records, as indicated between TMP1 and PTR, are returned to the free list. Additionally, L-PTR array is updated in block 168 by setting the L-PTR entry for the new base node which is currently pointed to by PTR, with zero. The zero in this record indicates the root of the tree and the end of the established list of link records. From block 168, the traceback is complete and flow proceeds to block 46 of Fig. 5a.

The present invention therefore provides a new and improved system and method for continuous speech recognition. The invention can readily be implemented as described in the efficiently formulated above flowcharts to accommodate real time recognition in a simple and inexpensive 8-bit processor. The present invention additionally provides excellent memory management such that only a minimum number of link records are needed to be stored as input frames are processed.

While the invention has been particularly shown and described with reference to a preferred embodiment, it will be understood by those skilled in the art that various modifications and changes may be made to the present invention described above without departing from the scope thereof as defined in the appended claims.

## Claims

1. A speech recognition system for recognizing groups of input frames, wherein a grammar model (21) may be stored in memory, the grammar model being composed of nodes connected by arcs, wherein the arcs have at least one associated template stored in memory (10) and respective originating and terminating nodes, and wherein groups of input frames may be compared to the stored templates to generate similarity measure parameters, comprising:

   means for structuring the grammar model (21) such that a first selected arc set, composed of one or more arcs and their respective nodes, comprises a loop within the grammar model;

   means (19) for providing first parameter storage for one or more nodes, including a terminating node for a selected arc;

   means (32) for determining at least one first similarity measure parameter set for storage in said first parameter storage for the originating node of said selected arc;

   the speech recognition system being characterized in that it comprises means (19) for providing second parameter storage for at least one node, including a terminating node for a selected arc;

   means (58, 60) for determining at least one second similarity measure parameter set for said selected arc using one or more templates associated with said selected arc and said first similarity measure parameter set stored at said originating node;

   means (62) for determining a third similarity measure parameter set for said selected arc using said at least one second similarity measure parameter set determined for said selected arc;

   means (64) for storing said third similarity measure parameter set determined at said terminating node in said first parameter storage means for said terminating node;

   means (39) for selectively transferring said first parameter storage contents to said second parameter storage means for said terminating node; and

   means (18, 20) for recognizing groups of input frames using said parameter storage contents associated with said terminating node.

2. The speech recognition system according to claim 1, wherein said terminating node is a terminating node for one of said arcs comprising said loop.

3. The speech recognition system according to claim 1, further including one or more null arcs in said grammar model.

4. A method of recognizing groups of input frames in a speech recognition system, wherein a grammar model may be stored in memory, the grammar model being composed of nodes connected by arcs, wherein the arcs have at least one associated template stored in memory and respective originating and terminating nodes, and wherein groups of input frames may be compared to the stored templates to generate similarity measure parameters, comprising the steps of:

   structuring the grammar model such that a first selected arc set, composed of one or more arcs and their respective nodes, comprises a loop within the grammar model;

   providing first parameter storage for one or more nodes, including a terminating node for a selected arc;

determining (32) at least one first similarity measure parameter set for storage in said first parameter storage for the originating node of said selected arc;

the method being characterized in that it comprises the step of providing second parameter storage for at least one node, including a terminating node for a selected arc;

determining (58, 60) at least one second similarity measure parameter set for said selected arc using one or more templates associated with said selected arc and said first similarity measure parameter set stored at said originating node;

determining (62) a third similarity measure parameter set for said selected arc using said at least one second similarity measure parameter set determined for said selected arc;

storing (64) said third similarity measure parameter set determined at said terminating node in said first parameter storage means for said terminating node;

selectively (39) transferring said first parameter storage contents to said second parameter storage means for said terminating node; and

recognizing groups of input frames using said parameter storage contents associated with said terminating node.

## Patentansprüche

1. Spracherkennungssystem zum Erkennen von Gruppen von Eingabeblöcken, wobei ein grammatikalisches Modell (21) in einem Speicher gespeichert werden kann, wobei das grammatikalische Modell aus Knoten zusammengesetzt ist, die durch Bögen miteinander verbunden sind, wobei die Bögen mindestens eine zugeordnete Lehre, die in einem Speicher (10) gespeichert ist, und entsprechende ausgehende und endende Knoten besitzen, und wobei Gruppen von Eingabeblöcken mit den gespeicherten Lehren verglichen werden können, um ähnliche Vergleichsparameter zu erzeugen, das folgende Merkmale aufweist:

   Einrichtungen zur Strukturierung des grammatikalischen Modells (21) derart, daß ein erster, ausgewählter Bogen-Satz, der aus einem oder mehreren Bögen und deren entsprechenden Knoten zusammengesetzt ist, eine Schleife innerhalb des grammatikalischen Modells aufweist;

   Einrichtungen (19) zur Bildung einer ersten Parameterspeicherung für einen oder mehrere Knoten, die einen Endknoten für einen ausgewählten Bogen umfaßt;

   Einrichtungen (32) zur Bestimmung mindestens eines ersten, ähnlichen Vergleichsparametersatzes in der ersten Parameterspeicherung für den Ursprungsknoten des ausgewählten Bogens;

   wobei das Spracherkennungssystem dadurch gekennzeichnet ist, daß es Einrichtungen (19) zur Bildung einer zweiten Parameterspeicherung für mindestens einen Knoten, der einen Endknoten für einen ausgewählten Bogen umfaßt;

   Einrichtungen (58, 60) zur Ermittlung mindestens eines zweiten, ähnlichen Vergleichsparametersatzes für einen ausgewählten Bogen, und zwar unter Verwendung einer oder mehrerer Lehren, die dem ausgewählten Bogen und dem ersten, ähnlichen Vergleichsparametersatz, der unter dem Ursprungsknoten gespeichert ist, zugeordnet ist;

   Einrichtungen (62) zur Ermittlung eines dritten, ähnlichen Vergleichsparametersatzesfür den ausgewählten Bogen unter Verwendung mindestens eines zweiten, ähnlichen Vergleichsparametersatzes, der für den ausgewählten Bogen bestimmt wird;

   Einrichtungen (64) zur Speicherung des dritten, ähnlichen Vergleichsparametersatzes,der an dem Endknoten in der ersten Parameterspeichereinrichtung für den Endknoten bestimmt ist;

   Einrichtungen (39) zur selektiven Übertragung der ersten Parameterspeicherinhalte zu der zweiten Parameterspeichereinrichtung für den Endknoten; und

   Einrichtungen (18, 20) zur Erkennung von Gruppen von Eingabeblöcken, die die Paramterspeicherinhalte benutzen, die dem Endknoten zugeordnet sind,

   aufweist.

2. Spracherkennungssystem nach Anspruch 1, wobei der Endknoten ein Endknoten für einen der Bögen ist, der die Schleife aufweist.

3. Spracherkennungssystem nach Anspruch 1, das weiterhin einen oder mehrere Null-Bögen in dem grammatikalischen Modell aufweist.

4. Verfahren zum Erkennen von Gruppen von Eingaberahmen in einem Spracherkennungssystem, wobei ein grammatikalisches Modell in einem Speicher gespeichert werden kann, wobei das grammatikalische Modell aus Knoten zusammengesetzt ist, die durch Bögen verbunden sind,
wobei die Bögen mindestens eine zugeordnete Lehre besitzen, die in dem Speicher gespeichert ist, und entsprechende Ursprungs- und End-Knoten, und wobei Gruppen von Eingabeblöcken mit den gespeicherten Lehren verglichen werden können, um ähnliche Vergleichsparametersätze zu erzeugen, das folgende Verfahrensschritte aufweist:
Strukturierung des grammatikalischen Modells derart, daß ein erster, ausgewählter Bogensatz, der aus einem oder mehreren Bögen und deren entsprechenden Knoten zusammengesetzt ist, eine Schleife innerhalb des grammatikalischen Modells aufweist;
Bildung einer ersten Parameterspeicherung für einen oder mehrere Knoten, die einen Endknoten für einen ausgewählten Bogen umfassen;
Bestimmung (32) mindestens eines ersten, ähnlichen Vergleichsparametersatzes zur Speicherung in dem ersten Parameterspeicher für den Ursprungsknoten des ausgewählten Bogens;
wobei das Verfahren dadurch gekennzeichnet ist, daß es den Verfahrensschritt der Bildung einer zweiten Parameterspeicherung für mindestens einen Knoten, der einen Endknoten für einen ausgewählten Bogen umfaßt;
die Ermittlung (58, 60) mindestens eines zweiten, ähnlichen Vergleichsparametersatzes für den ausgewählten Bogen, und zwar unter Verwendung einer oder mehrerer Lehren, die dem ausgewählten Bogen und dem ersten, ähnlichen Vergleichsparametersatz, der an dem Ursprungsknoten gespeichert ist, zugeordnet ist;
die Bestimmung (62) eines dritten, ähnlichen Vergleichsparametersatzes für den ausgewählten Bogen, und zwar unter Verwendung des mindestens einen, zweiten, ähnlichen Vergleichsparametersatzes, der für den ausgewählten Bogen bestimmt ist;
die Speicherung (64) des dritten, ähnlichen Vergleichsparametersatzes, der an den Endknoten in der ersten Parameterspeichereinrichtung für den Endknoten bestimmt ist;
die selektive (39) Übertragung der ersten Parameterspeicherinhalte zu der zweiten Parameterspeichereinrichtung für den Endknoten; und
die Erkennung von Gruppen von Eingaberahmen, und zwar unter Verwendung der Parameterspeicherinhalte, die dem Endknoten zugeordnet ist,
umfaßt.

**Revendications**

1. Système de reconnaissance de la parole pour reconnaître des groupes de trames d'entrée, dans lequel un modèle de grammaire (21) peut être mémorisé dans une mémoire, le modèle de grammaire étant composé de noeuds reliés par des arcs, dans lequel les arcs ont au moins un modèle de mot associé mémorisé dans la mémoire (10) et des noeuds d'origine et de fin respectifs, et dans lequel des groupes de trames d'entrée peuvent être comparés aux modèles de mots mémorisés pour produire des paramètres de mesure de similarité, comprenant:
- des moyens pour structurer le modèle de grammaire (21) de telle manière qu'un premier ensemble d'arcs sélectionnés composé d'un ou plusieurs arcs et de leurs noeuds respectifs forme une boucle dans le modèle de grammaire;
- des premiers moyens (19) de mémorisation de paramètres pour un ou plusieurs noeuds incluant un noeud de fin pour un arc sélectionné;
- des moyens (32) pour déterminer au moins un premier ensemble de paramètres de mesure de similarité pour mémorisation dans lesdits premiers moyens de mémorisation de paramètres pour le noeud d'origine dudit arc sélectionné,

  le système de reconnaissance de la parole étant caractérisé en ce qu'il comprend des deuxièmes moyens (19) de mémorisation de paramètres pour au moins un noeud incluant un noeud de fin pour un arc sélectionné;
- des moyens (58, 60) pour déterminer au moins un deuxième ensemble de paramètres de mesure de similarité pour ledit arc sélectionné en utilisant un ou plusieurs modèles de mots associés audit arc sélectionné, et audit premier ensemble de paramètres de mesure de similarité mémorisé pour ledit noeud d'origine;
- des moyens (62) pour déterminer un troisième ensemble de paramètres de mesure de similarité pour ledit arc sélectionné en utilisant au moins un deuxième paramètre de mesure de similarité déterminé pour ledit arc sélectionné;

- des moyens (64) pour mémoriser ledit troisième ensemble de paramètres de mesure de similarité déterminé audit point de fin dans lesdits premiers moyens de mémorisation de paramètres pour ledit noeud de fin;
- des moyens (39) pour transférer sélectivmeent le contenu desdits premiers moyens de mémorisation de paramètres auxdits deuxièmes moyens de mémorisation de paramètres pour ledit noeud de fin; et
- des moyens (18, 20) pour reconnaître des groupes de trames d'entrée en utilisant le contenu desdits moyens de mémorisation de paramètres associés audit noeud de fin.

**2.** Système de reconnaissance de la parole selon la revendication 1, dans lequel ledit noeud de fin est un noeud de fin pour un desdits arcs formant ladite boucle.

**3.** Système de reconnaissance de la parole selon la revendication 1, comprenant en outre un ou plusieurs arcs nuls dans ledit modèle de grammaire.

**4.** Procédé de reconnaissance de groupes de trames d'entrée dans un système de reconnaissance de la parole, dans lequel un modèle de grammaire peut être mémorisé dans une mémoire, le modèle de grammaire étant composé de noeuds reliés par des arcs, dans lequel les arcs ont au moins un modèle de mot associé mémorisé dans la mémoire et des noeuds d'origine et de fin respectifs, et dans lequel des groupes de trames d'entrée peuvent être comparés aux modèles de mot mémorisés pour produire des paramètres de mesure de similarité, ledit procédé comprenant les étapes consistant à:

- structurer le modèle de grammaire de telle manière qu'un premier ensemble d'arcs sélectionnés composé d'un ou plusieurs arcs et de leurs noeuds respectifs forme une boucle dans le modèle de grammaire;
- prévoir des premiers moyens de mémorisation pour un ou plusieurs noeuds incluant un noeud de fin pour un arc sélectionné;
- déterminer (32) au moins un premier ensemble de paramètres de mesure de similarité pour mémorisation dans lesdits premiers moyens de mémorisation de paramètres pour le noeud d'origine dudit arc sélectionné,

  le procédé étant caractérisé en ce qu'il comprend l'étape consistant à prévoir des deuxièmes moyens de mémorisation de paramètres pour au moins un noeud incluant un noeud de fin pour un arc sélectionné;
- déterminer (58, 60) au moins un deuxième ensemble de paramètres de mesure de similarité pour ledit arc sélectionné en utilisant un ou plusieurs modèles de mot associés audit arc sélectionné et audit premier ensemble de paramètres de mesure de similarité mémorisé pour ledit noeud d'origine;
- déterminer (62) un troisième ensemble de paramètres de mesure de similarité pour ledit arc sélectionné en utilisant ledit au moins un deuxième ensemble de paramètres de mesure de similarité déterminé pour ledit arc sélectionné;
- mémoriser (64) ledit troisième ensemble de paramètres de mesure de similarité déterminé audit noeud de fin dans lesdits premiers moyens de mémorisation de paramètres pour ledit noeud de fin;
- transférer sélectivement (39) le contenu desdits premiers moyens de mémorisation de paramètres auxdits deuxièmes moyens de mémorisation de paramètres pour ledit noeud de fin; et
- reconnaître des groupes de trames d'entrée en utilisant ledit contenu des moyens de mémorisation associé audit noeud de fin.

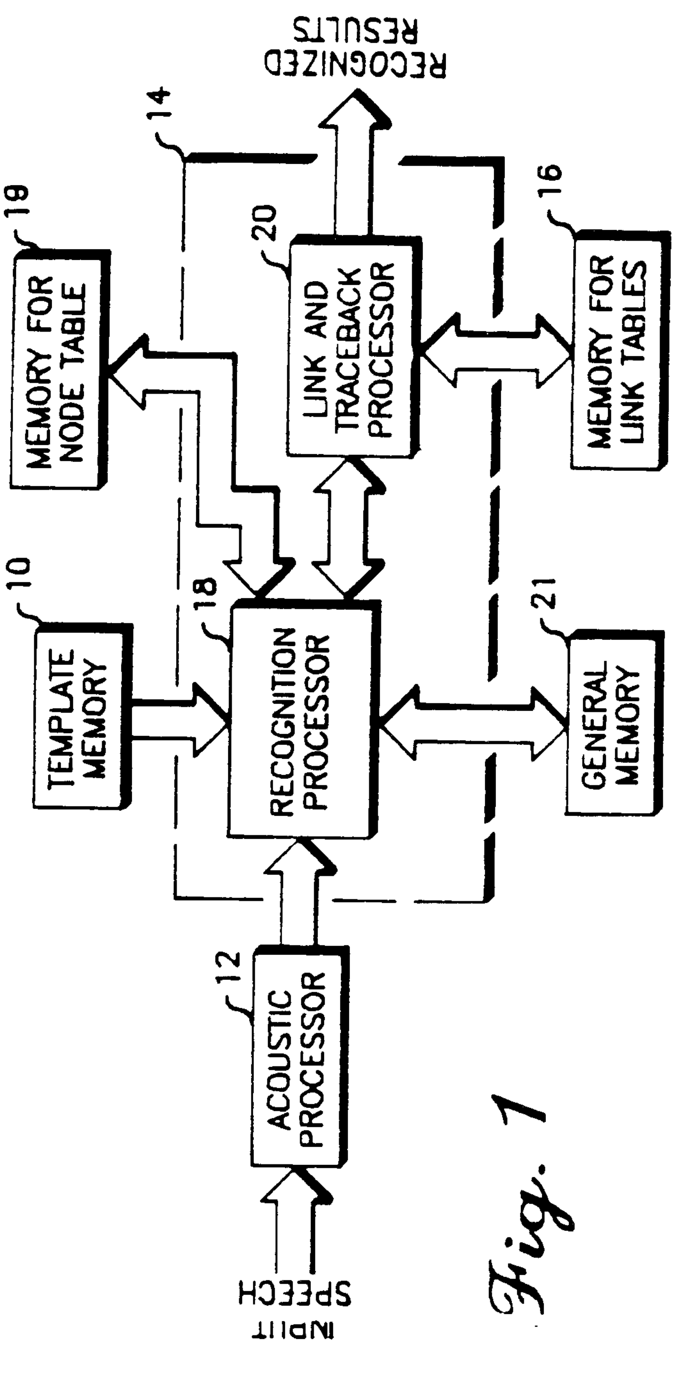


Fig. 1

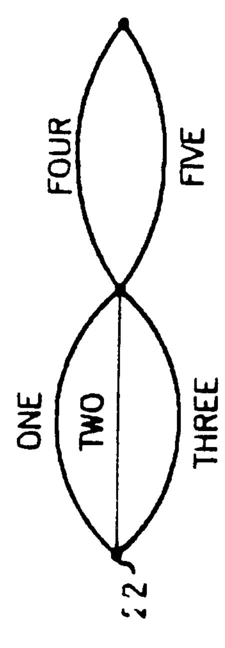


Fig. 2

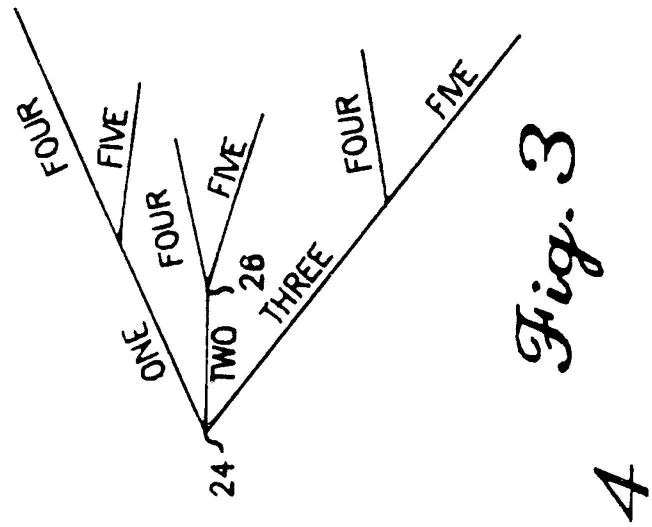


Fig. 3

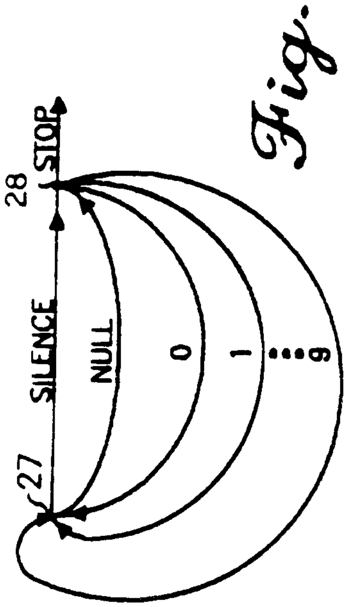


Fig. 4

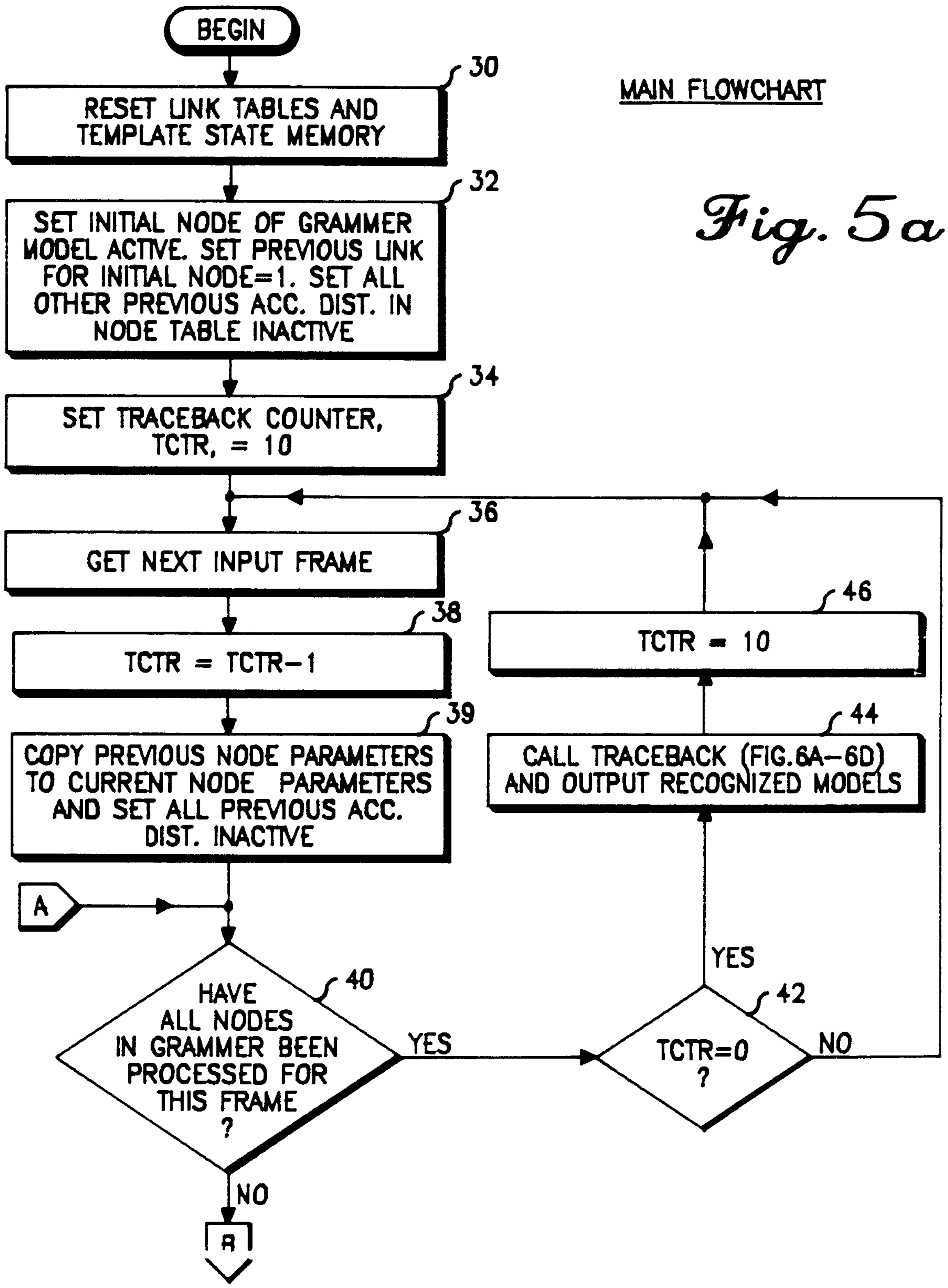
BEGIN
30
RESET LINK TABLES AND TEMPLATE STATE MEMORY
32
SET INITIAL NODE OF GRAMMER MODEL ACTIVE. SET PREVIOUS LINK FOR INITIAL NODE=1. SET ALL OTHER PREVIOUS ACC. DIST. IN NODE TABLE INACTIVE
34
SET TRACEBACK COUNTER, TCTR, = 10
36
GET NEXT INPUT FRAME
38
TCTR = TCTR−1
39
COPY PREVIOUS NODE PARAMETERS TO CURRENT NODE PARAMETERS AND SET ALL PREVIOUS ACC. DIST. INACTIVE
A
40
HAVE ALL NODES IN GRAMMER BEEN PROCESSED FOR THIS FRAME ?
YES
NO
B
42
TCTR=0 ?
YES
NO
44
CALL TRACEBACK (FIG.6A−6D) AND OUTPUT RECOGNIZED MODELS
46
TCTR = 10
MAIN FLOWCHART

Fig. 5a

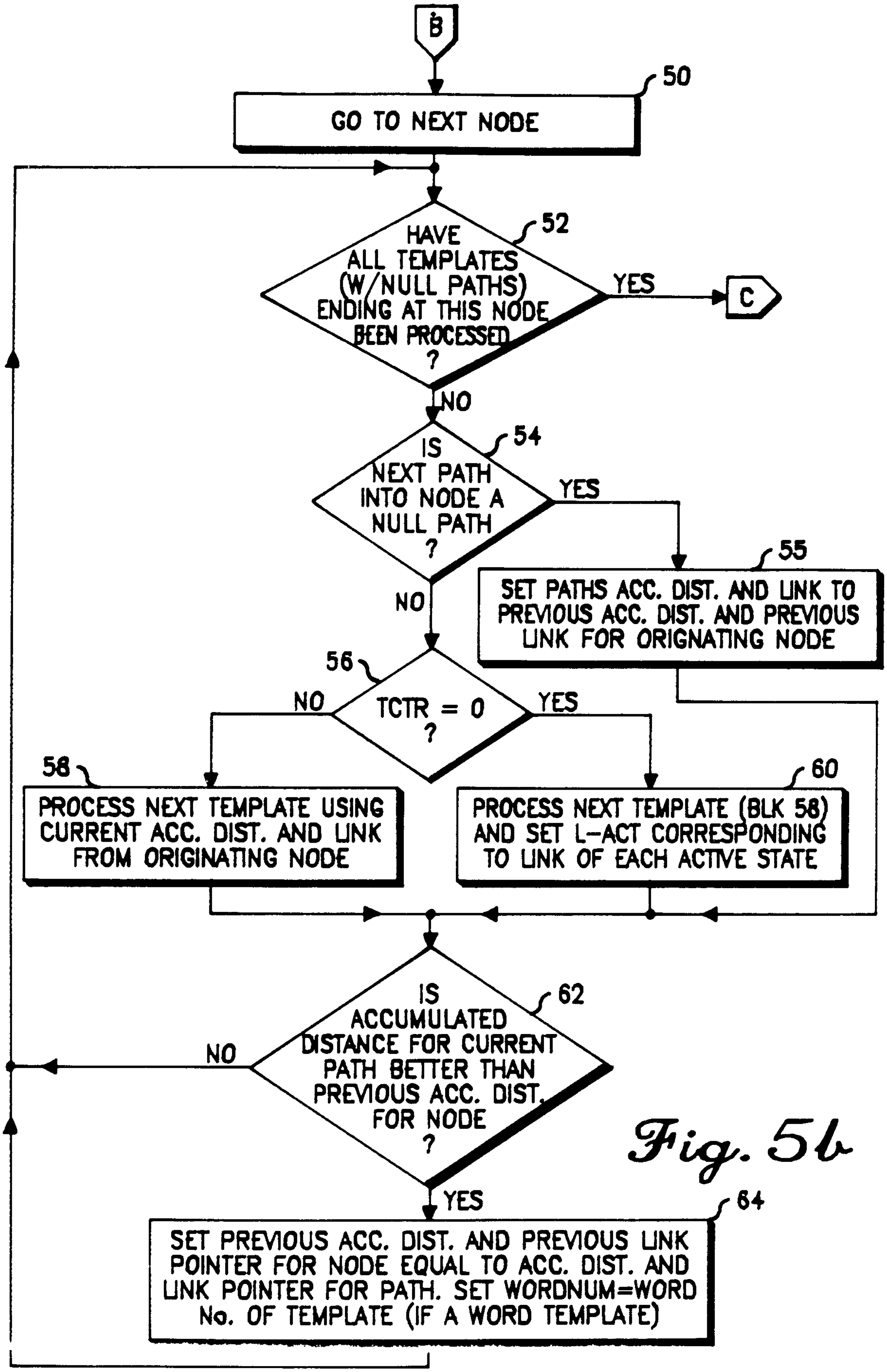
B
50
GO TO NEXT NODE
52
HAVE ALL TEMPLATES (W/NULL PATHS) ENDING AT THIS NODE BEEN PROCESSED ?
YES
C
NO
54
IS NEXT PATH INTO NODE A NULL PATH ?
YES
55
SET PATHS ACC. DIST. AND LINK TO PREVIOUS ACC. DIST. AND PREVIOUS LINK FOR ORIGNATING NODE
NO
56
TCTR = 0 ?
NO
YES
58
PROCESS NEXT TEMPLATE USING CURRENT ACC. DIST. AND LINK FROM ORIGINATING NODE
60
PROCESS NEXT TEMPLATE (BLK 58) AND SET L-ACT CORRESPONDING TO LINK OF EACH ACTIVE STATE
62
IS ACCUMULATED DISTANCE FOR CURRENT PATH BETTER THAN PREVIOUS ACC. DIST. FOR NODE ?
NO
YES
64
SET PREVIOUS ACC. DIST. AND PREVIOUS LINK POINTER FOR NODE EQUAL TO ACC. DIST. AND LINK POINTER FOR PATH. SET WORDNUM=WORD No. OF TEMPLATE (IF A WORD TEMPLATE)

Fig. 5b

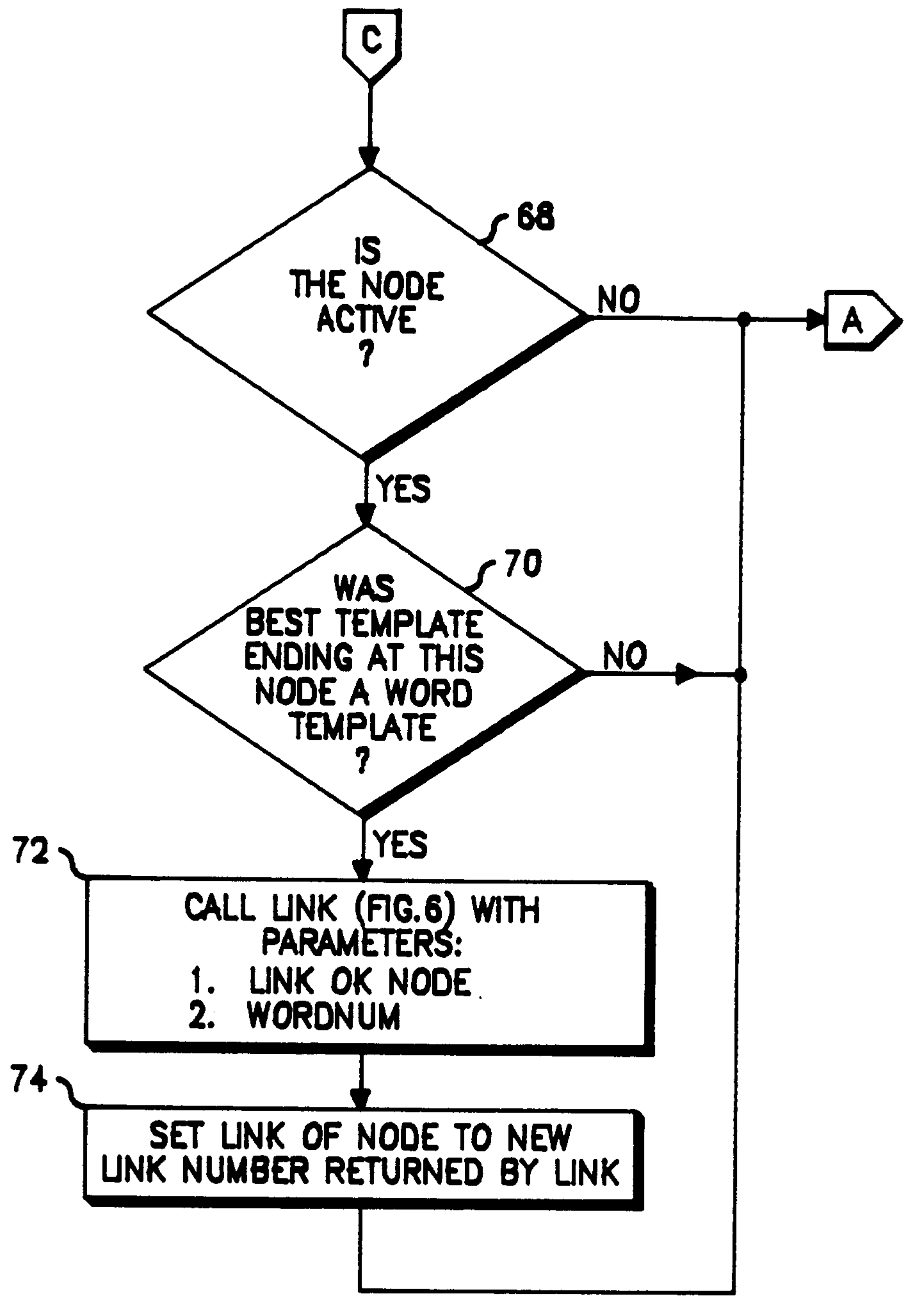
C
IS
THE NODE
ACTIVE
?
68
NO
A
YES
WAS
BEST TEMPLATE
ENDING AT THIS
NODE A WORD
TEMPLATE
?
70
NO
YES
72
CALL LINK (FIG.6) WITH
PARAMETERS:
1. LINK OK NODE
2. WORDNUM
74
SET LINK OF NODE TO NEW
LINK NUMBER RETURNED BY LINK

Fig. 5c

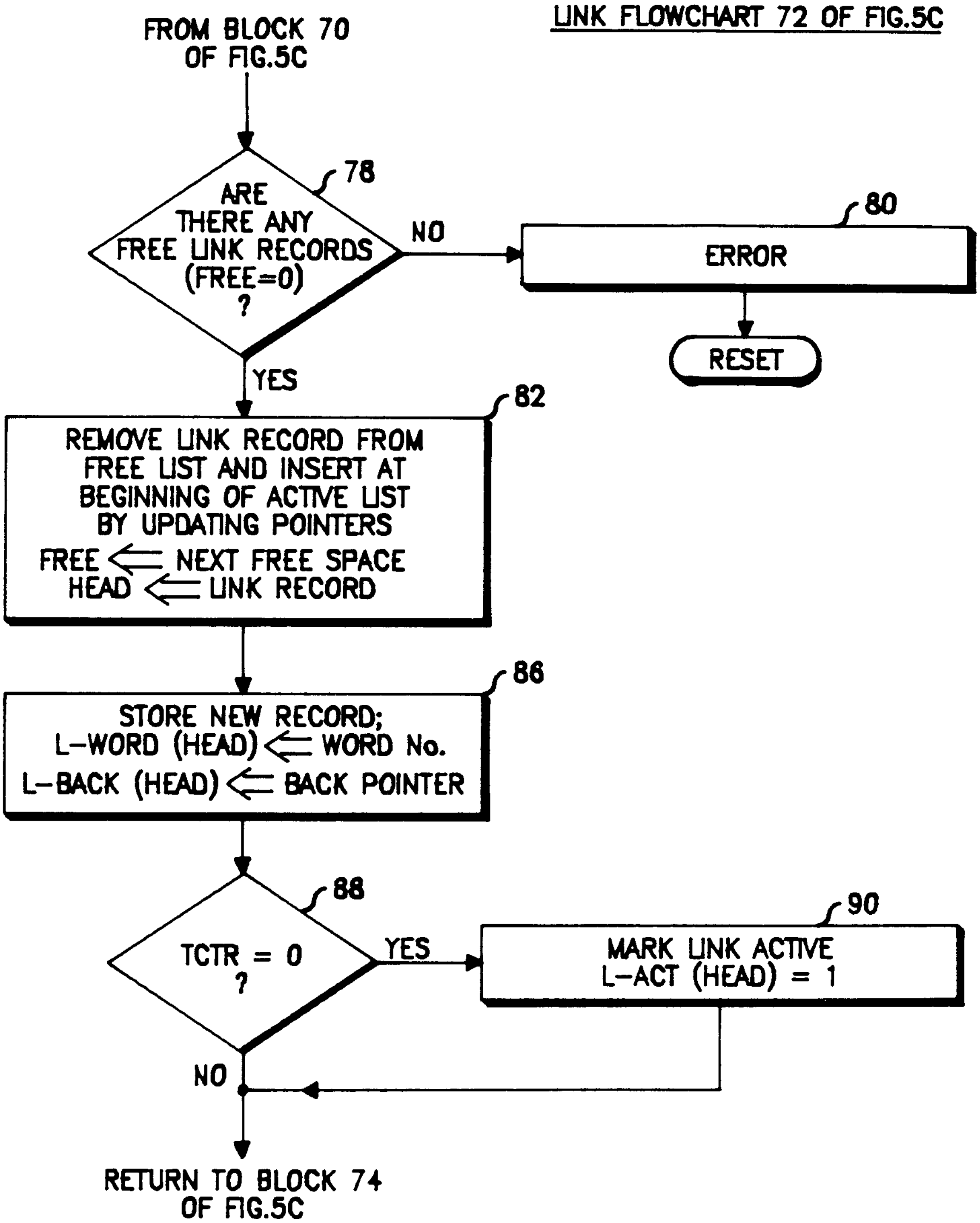
LINK FLOWCHART 72 OF FIG.5C
FROM BLOCK 70 OF FIG.5C
78
ARE THERE ANY FREE LINK RECORDS (FREE=0) ?
NO
80
ERROR
RESET
YES
82
REMOVE LINK RECORD FROM FREE LIST AND INSERT AT BEGINNING OF ACTIVE LIST BY UPDATING POINTERS
FREE ⇐ NEXT FREE SPACE
HEAD ⇐ LINK RECORD
86
STORE NEW RECORD;
L-WORD (HEAD) ⇐ WORD No.
L-BACK (HEAD) ⇐ BACK POINTER
88
TCTR = 0 ?
YES
90
MARK LINK ACTIVE
L-ACT (HEAD) = 1
NO
RETURN TO BLOCK 74 OF FIG.5C

Fig. 6

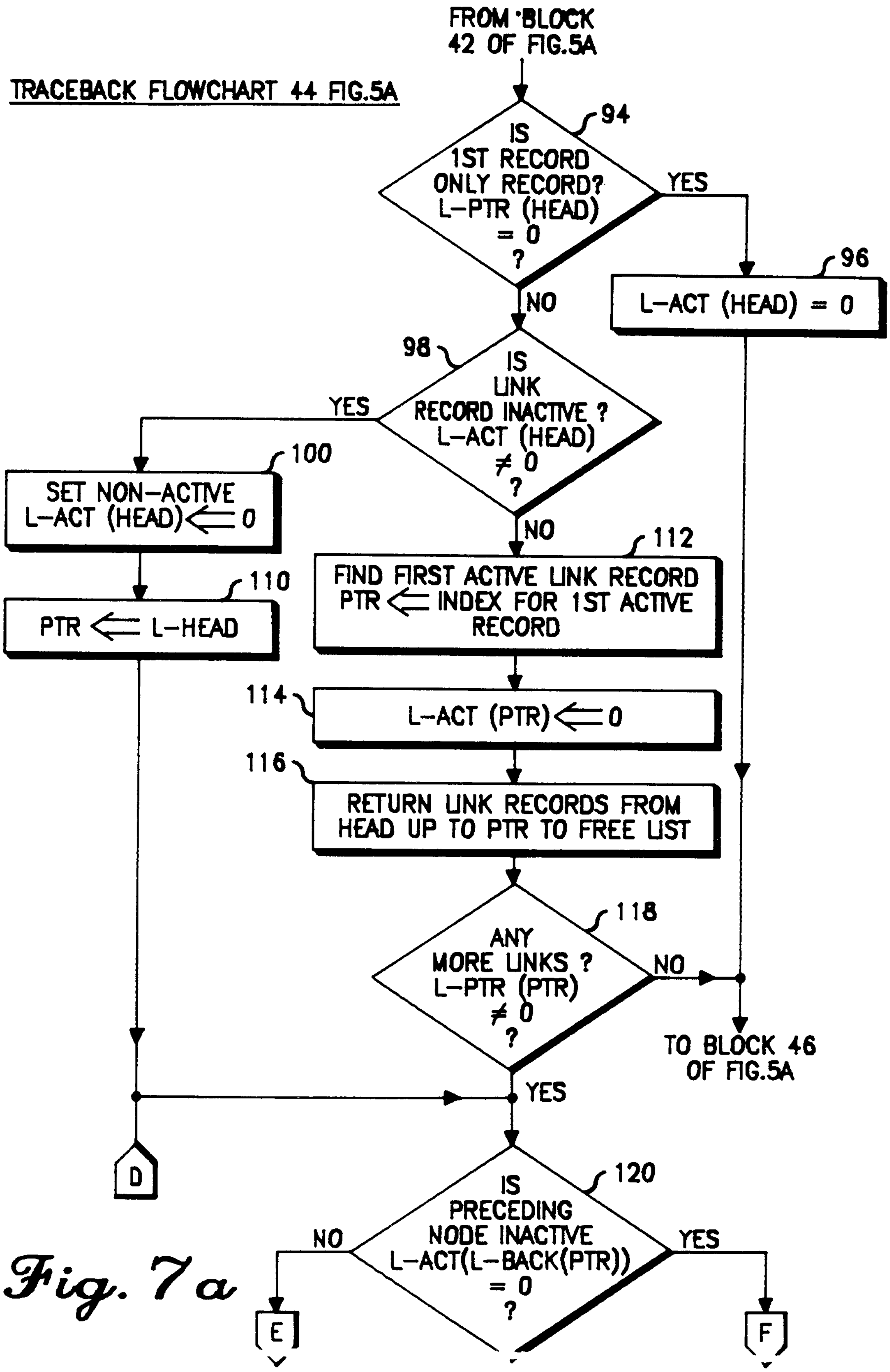
FROM BLOCK
42 OF FIG.5A
TRACEBACK FLOWCHART 44 FIG.5A
94
IS
1ST RECORD
ONLY RECORD?
L-PTR (HEAD)
= 0
?
YES
96
L-ACT (HEAD) = 0
NO
98
IS
LINK
RECORD INACTIVE ?
L-ACT (HEAD)
≠ 0
?
YES
100
SET NON-ACTIVE
L-ACT (HEAD) ⇐ 0
NO
112
FIND FIRST ACTIVE LINK RECORD
PTR ⇐ INDEX FOR 1ST ACTIVE
RECORD
110
PTR ⇐ L-HEAD
114
L-ACT (PTR) ⇐ 0
116
RETURN LINK RECORDS FROM
HEAD UP TO PTR TO FREE LIST
118
ANY
MORE LINKS ?
L-PTR (PTR)
≠ 0
?
NO
TO BLOCK 46
OF FIG.5A
YES
D
120
IS
PRECEDING
NODE INACTIVE
L-ACT(L-BACK(PTR))
= 0
?
NO
YES
E
F

Fig. 7a

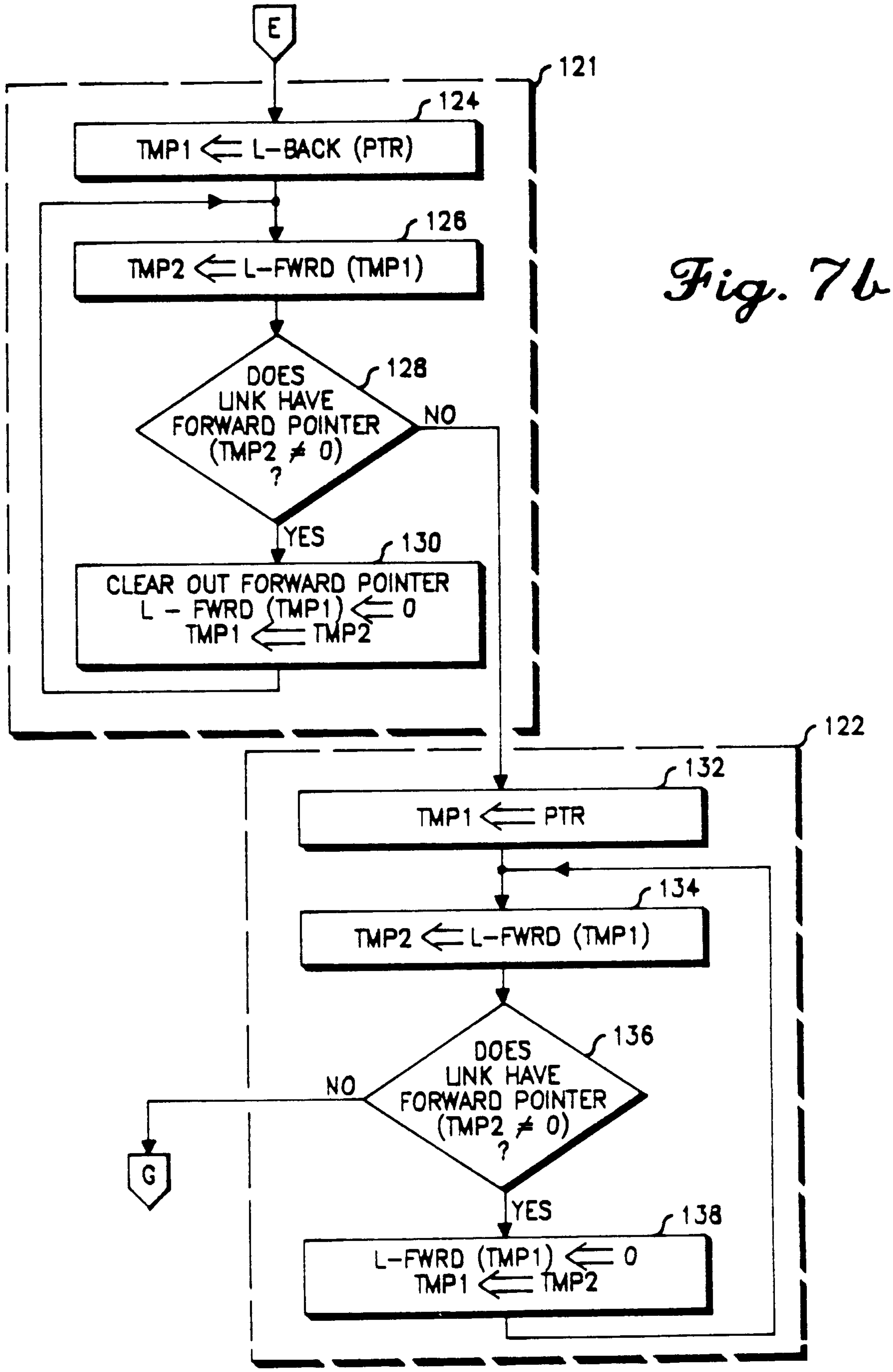
E
121
124
TMP1 ⇐ L-BACK (PTR)
126
TMP2 ⇐ L-FWRD (TMP1)
128
DOES LINK HAVE FORWARD POINTER (TMP2 ≠ 0) ?
NO
YES
130
CLEAR OUT FORWARD POINTER
L - FWRD (TMP1) ⇐ 0
TMP1 ⇐ TMP2
122
132
TMP1 ⇐ PTR
134
TMP2 ⇐ L-FWRD (TMP1)
136
DOES LINK HAVE FORWARD POINTER (TMP2 ≠ 0) ?
NO
G
YES
138
L-FWRD (TMP1) ⇐ 0
TMP1 ⇐ TMP2

Fig. 7b

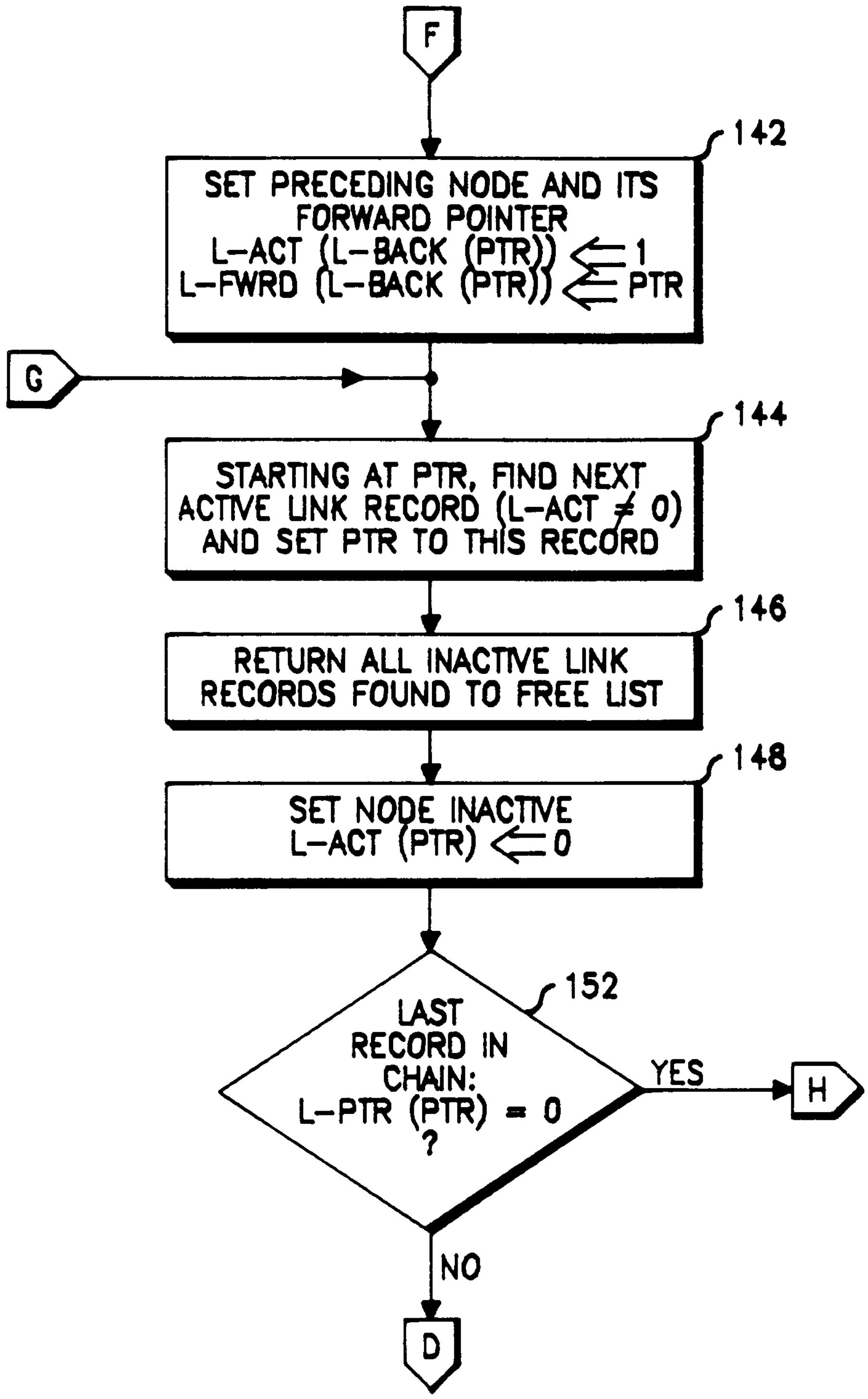
F
142
SET PRECEDING NODE AND ITS FORWARD POINTER
L-ACT (L-BACK (PTR)) ⇐ 1
L-FWRD (L-BACK (PTR)) ⇐ PTR
G
144
STARTING AT PTR, FIND NEXT ACTIVE LINK RECORD (L-ACT ≠ 0) AND SET PTR TO THIS RECORD
146
RETURN ALL INACTIVE LINK RECORDS FOUND TO FREE LIST
148
SET NODE INACTIVE
L-ACT (PTR) ⇐ 0
152
LAST RECORD IN CHAIN: L-PTR (PTR) = 0 ?
YES
H
NO
D

*Fig. 7c*

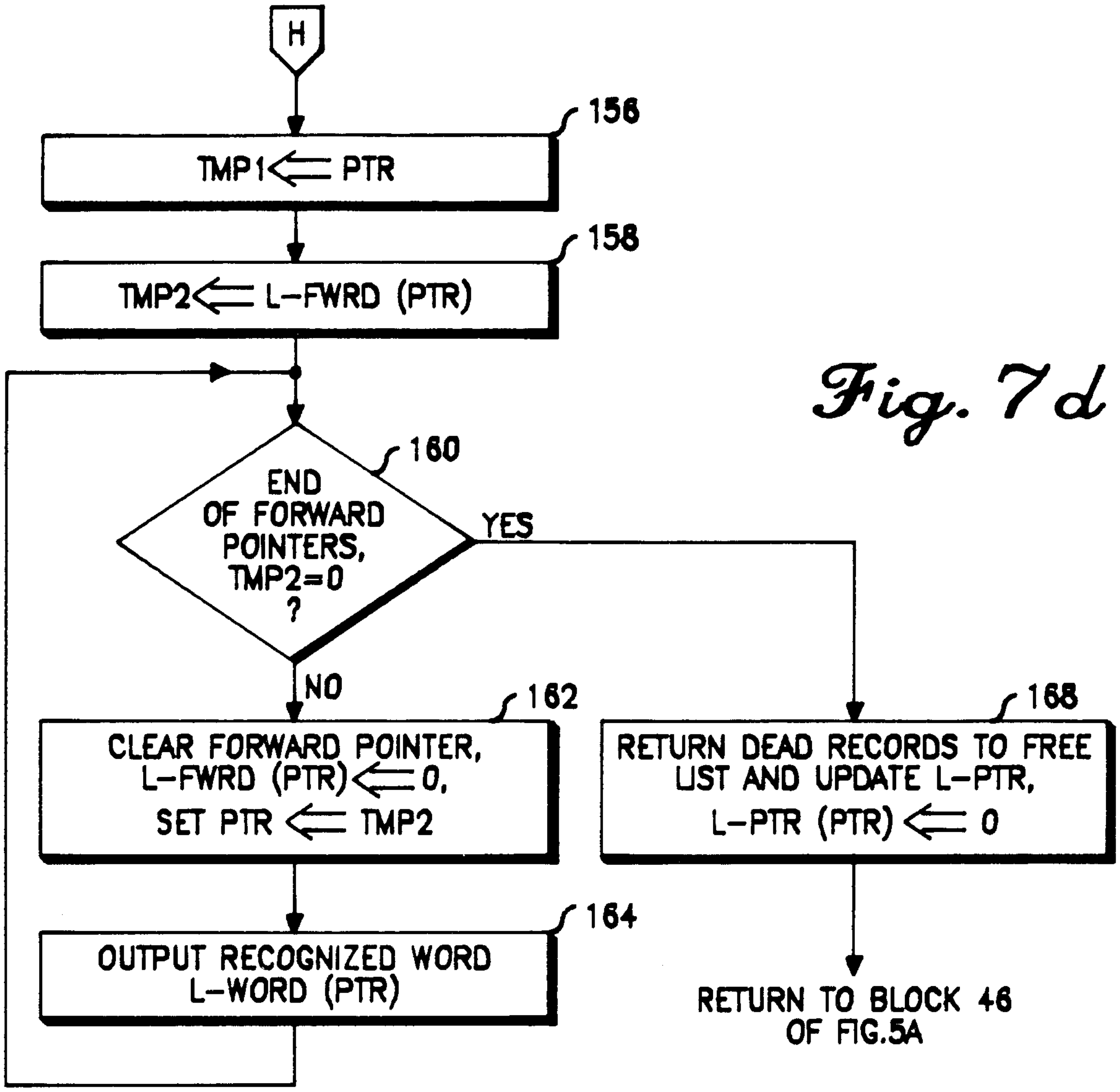
H
156
TMP1 ⇐ PTR
158
TMP2 ⇐ L-FWRD (PTR)
160
END OF FORWARD POINTERS, TMP2=0 ?
YES
NO
162
CLEAR FORWARD POINTER, L-FWRD (PTR) ⇐ 0, SET PTR ⇐ TMP2
164
OUTPUT RECOGNIZED WORD L-WORD (PTR)
168
RETURN DEAD RECORDS TO FREE LIST AND UPDATE L-PTR, L-PTR (PTR) ⇐ 0
RETURN TO BLOCK 46 OF FIG.5A

Fig. 7d

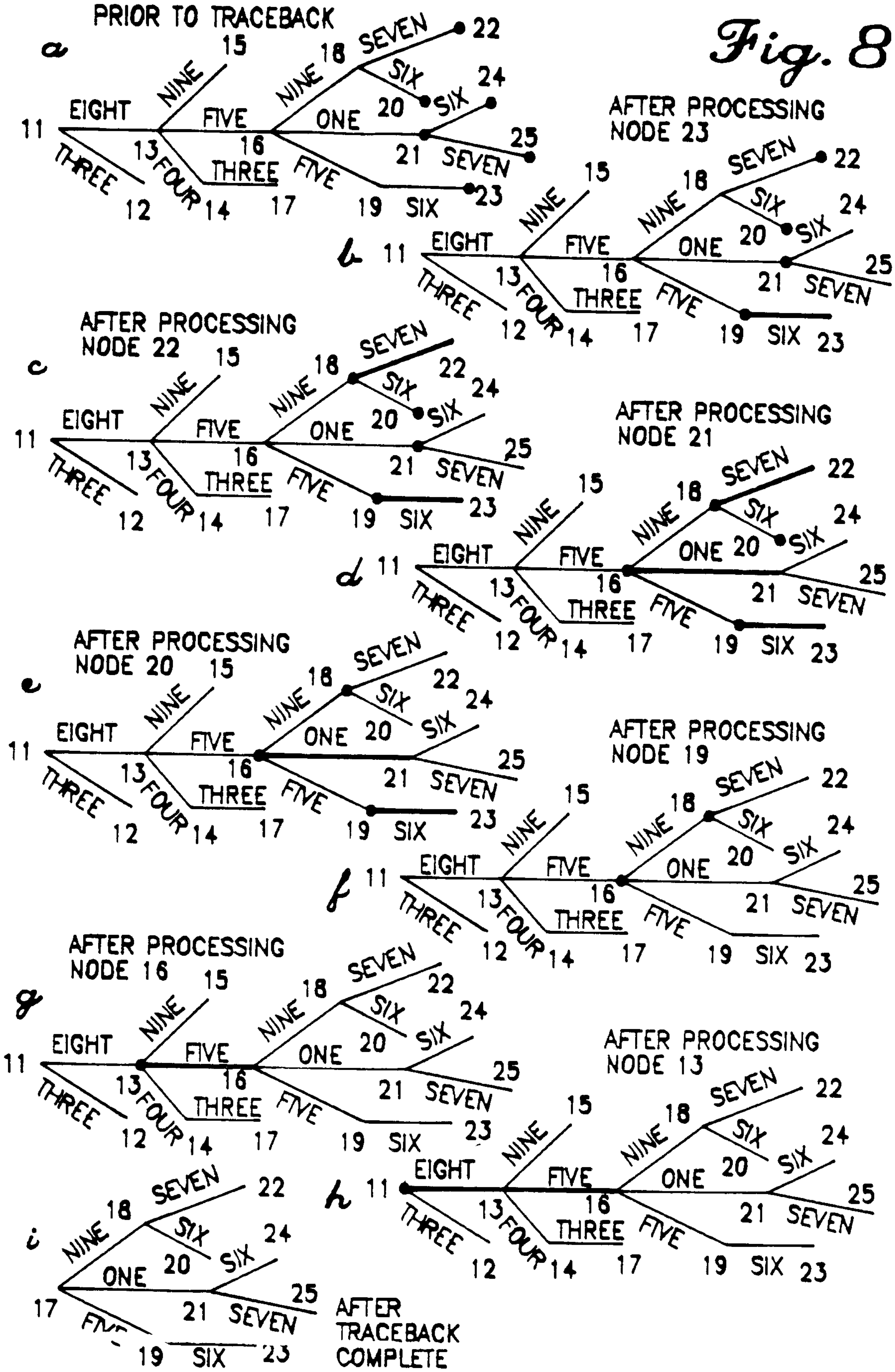
a
PRIOR TO TRACEBACK
b
AFTER PROCESSING NODE 23
c
AFTER PROCESSING NODE 22
d
AFTER PROCESSING NODE 21
e
AFTER PROCESSING NODE 20
f
AFTER PROCESSING NODE 19
g
AFTER PROCESSING NODE 16
h
AFTER PROCESSING NODE 13
i
AFTER TRACEBACK COMPLETE
EIGHT
NINE
FIVE
ONE
SEVEN
SIX
THREE
FOUR
11
12
13
14
15
16
17
18
19
20
21
22
23
24
25

Fig. 8

Fig. 9

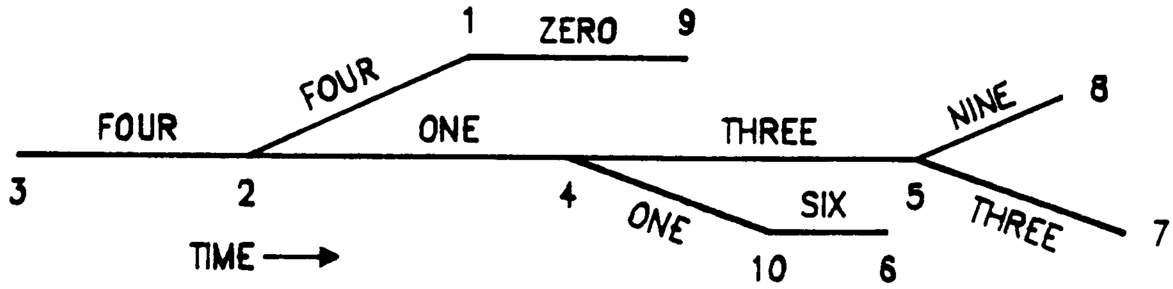
1
ZERO
9
FOUR
FOUR
ONE
THREE
NINE
8
3
2
4
ONE
SIX
5
THREE
7
10
6
TIME